# EUROPEAN PATENT APPLICATION

(11) **EP 3 722 876 A1**
(43) Date of publication of application: **14.10.2020**
(21) Application number: 18886224.7
(22) Date of filing: 30.11.2018
(51) Int. Cl.: G03B 21/62, C03C 27/12, G02B 5/02, G03B 21/00, H04N 5/74

(54) **IMAGE DISPLAY SYSTEM AND IMAGE DISPLAY METHOD**

(30) Priority: 05.12.2017 JP 2017233299
(71) Applicant: Sekisui Chemical Co., Ltd., Osaka-shi, Osaka 530-8565 (JP)
(72) Inventor: NAKAJIMA, Daisuke, Koka-shi Shiga 528-8585 (JP); YANAI, Masashi, Roermond 6045 JB (NL)
(74) Representative: Ter Meer Steinmeister & Partner
(86) International application number: PCT/JP2018/044287
(87) International publication number: WO 2019/111825

(57) **Abstract**

An image display system (10) of the present invention includes: a sheet-shaped glass structure (11) containing a light scattering compound; and a light source (20) that irradiates one surface (11B) of the sheet-shaped glass structure (11) with light, wherein an images is displayed on the other surface (11F) of the sheet-shaped glass structure (11) by the light scattered by the light scattering compound. According to the present invention, in a rear projection-type image display system, image display with high contrast and high luminance is achieved, and a light source or the like disposed on the back surface side of the screen is less likely to be viewed.

## Description

### Technical Field

The present invention relates to an image display system using rear projection, and an image display method.

### Background Art

Conventionally, a so-called rear projection-type transparent screen in which images projected from a projector are displayed on the screen and viewed from the opposite side of the projector across the screen has been put to practical use. As a sheet that can be used as such a rear projection-type transparent screen, PTL 1 discloses a sheet-shaped transparent laminate including: a transparent light scattering layer containing a binder and at least any one of bright flaky fine particles and substantially spherical fine particles; and a transparent antireflection layer, for example.

Further, a glass structure through which light can be transmitted but a person or an object located behind window glass cannot be viewed, for enhancing privacy protection, is known as window glass for vehicles such as automobiles, railway vehicles, aircrafts, and ships or window glass for constructions. As such a glass structure, a glass structure formed as a laminated glass by disposing an interlayer between two sheets of glass and mixing inorganic fine particles in the interlayer is known, for example, as disclosed in PTL 2.

### Citation List

### Patent Literature

PTL 1: WO 2016/204009 A1
PTL 2: JP 2016-69258 A

### Summary of Invention

### Technical Problem

The rear projection-type screen of PTL 1 has high transparency but may not be able to exert sufficiently high contrast or luminance of images to be projected on the screen. Further, the projector disposed on the back surface side may be viewed from the front surface side via the screen in some cases, thereby reducing the image quality.

Further, in recent years, the needs for projection-type screens are expanding, and use of window glass with privacy protection as a rear projection-type screen has been investigated, for example. However, it is difficult to form a glass structure with privacy protection using the rear projection-type screen of PTL 1.

Therefore, it is an object of the present invention to achieve image display with high contrast and high luminance in a rear projection-type image display system and to make a light source such as a projector disposed on the back surface side of the screen less likely to be viewed. Further, it is another object of the present invention to provide an image display system capable of achieving image display with high contrast and high luminance even in the case of using window glass with high privacy protection or the like as a rear projection-type screen.

### Solution to Problem

As a result of diligent studies, the inventors have found that the aforementioned objects can be solved by using a sheet-shaped glass structure containing a light scattering compound as a rear radiation-type screen, thereby accomplishing the present invention below.
[1] An image display system comprising: a sheet-shaped glass structure comprising a light scattering compound; and a light source that irradiates one surface of the sheet-shaped glass structure with light, wherein an image is displayed on the other surface of the sheet-shaped glass structure by the light scattered by the light scattering compound.
[2] The image display system according to [1] above, wherein the sheet-shaped glass structure comprises a light scattering layer comprising a light scattering compound, and the content of the light scattering compound in the light scattering layer is 0.1 to 30 mass%.
[3] The image display system according to [2] above, wherein the sheet-shaped glass structure has a multilayer structure in which at least a glass plate and the light scattering layer are laminated.
[4] The image display system according to [2] or [3] above, wherein the light scattering layer is a light scattering resin layer comprising a resin and the light scattering compound dispersed in the resin.
[5] The image display system according to [4] above, wherein the sheet-shaped glass structure has a laminated glass structure comprising two glass plates and an interlayer disposed between the glass plates, and the interlayer comprises the light scattering resin layer.
[6] The image display system according to [4] or [5] above, wherein the resin is a thermoplastic resin.
[7] The image display system according to [6] above, wherein the thermoplastic resin is a polyvinyl acetal resin.
[8] The image display system according to any one of [1] to [7] above, wherein the light scattering compound is calcium carbonate.
[9] The image display system according to any one of [1] to [8] above, wherein the light scattering compound is in the form of particles having an average particle size of 1 to 50 µm.
[10] An image display method comprising: irradiating one surface of a sheet-shaped glass structure comprising a light scattering compound with light from a light source; and displaying an image on the other surface of the sheet-shaped glass structure by the light scattered by the light scattering compound.

### Advantageous Effects of Invention

The present invention enables image display with high contrast and high luminance to be achieved in a rear projection-type image display system and can make a light source or the like disposed on the back surface side of a screen less likely to be viewed through the screen. Further, even when window glass with high privacy protection or the like is used as a rear projection-type screen, image display with high contrast and high luminance can be achieved.

### Brief Description of Drawings

[Fig. 1] Fig. 1 is a schematic diagram showing an image display system according to one embodiment of the present invention.
[Fig. 2] Fig. 2 is a schematic sectional view showing one embodiment of a sheet-shaped glass structure.
[Fig. 3] Fig. 3 is a schematic sectional view showing another embodiment of the sheet-shaped glass structure.
[Fig. 4] Fig. 4 is a schematic sectional view showing another embodiment of the sheet-shaped glass structure.

### Description of Embodiments

Embodiments of an image display system and an image display method of the present invention will be illustrated below.

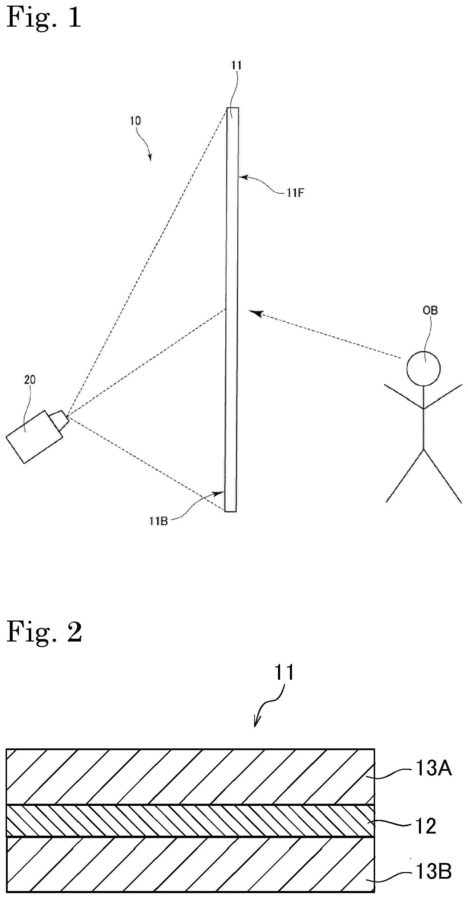

Fig. 1 shows an image display system according to an embodiment of the present invention. An image display system 10 includes a sheet-shaped glass structure 11 containing a light scattering compound, and a light source 20. The image display system 10 is of the rear projection type, in which the light source 20 irradiates one surface (back surface 11B) of the sheet-shaped glass structure 11 with light, and the irradiation light causes images to be displayed on the other surface (front surface 11F) of the sheet-shaped glass structure 11. The images displayed on the front surface 11F side are viewed by an observer OB in front of the sheet-shaped glass structure 11. The images displayed on the front surface 11F may be projected images such as moving images, but may be still pictures, messages composed of characters, icons, trademarks, and the like, or logos, etc. and there is no specific limitation.

As the light source 20, light sources conventionally used for rear projection-type image display systems can be used, and projectors capable of projecting various images such as videos can be used, for example. Further, in the case of displaying a projected image without any change in the image, such as fixed icons and fixed messages, the projectors are not necessarily used, and a light source that irradiates the sheet-shaped glass structure 11 with a fixed pattern of light, which is corresponding to the images, may be used. The light with which the sheet-shaped glass structure 11 is irradiated is light corresponding to images that are inverted to right and left from the images to be displayed. A method for emitting the irradiation light corresponding to the images that are inverted to right and left is not specifically limited, and the inversion to right and left may be achieved by adjusting image signals or using a reverse mirror or the like.

In the image display system 10, the light emitted from the light source 20 may directly irradiate the sheet-shaped glass structure 11, but may irradiate the sheet-shaped glass structure 11 via an optical member such as a reflecting mirror and a reverse mirror.

Further, the angle of incidence of the optical axis of the light emitted from the light source 20 onto the back surface 11B of the sheet-shaped glass structure 11 may be 0° so as to be perpendicular to the back surface 11B of the sheet-shaped glass structure 11 or may be 0° or more and less than 90° so as to be inclined to the perpendicular line of the back surface 11B.

The sheet-shaped glass structure 11 contains a light scattering compound. When the sheet-shaped glass structure 11 contains the light scattering compound, the light that enters from the back surface 11B is scattered in the sheet-shaped glass structure 11, so that the scattered light is emitted from the front surface 11F, thereby allowing images with high contrast and high luminance to be displayed on the front surface 11F.

Further, when the sheet-shaped glass structure 11 contains the light scattering compound, the member (such as the light source 20 and the optical member) disposed on the back surface 11B side for irradiating the sheet-shaped glass structure 11 with light is less likely to be viewed from the front 11F side through the sheet-shaped glass structure 11. Further, when the glass structure 11 is used as window glass and the like, the sheet-shaped glass structure 11 can enhance the privacy protection. Use of such window glass with high privacy protection through which the view is blocked by the light scattering compound as a rear projection-type screen has not been previously conceived at all, but the use as a rear projection-type screen in the present invention can allow images with high contrast and high luminance to be obtained, unexpectedly.

The sheet-shaped glass structure 11 used in the present invention may be composed of a single layer, or may have a multilayer structure having two or more layers. Further, the sheet-shaped glass structure 11 has at least one layer that is a glass plate. The sheet-shaped glass structure 11 having a multilayer structure may include one sheet of glass plate or two or more sheets thereof. Further, the sheet-shaped glass structure 11 has a light scattering layer containing the light scattering compound. In the present invention, the glass plate may serve as the light scattering layer, or a layer other than the glass plate may serve as the light scattering layer.

### [Light scattering compound]

The light scattering compound used in the present invention is not particularly limited, as long as it is a compound capable of scattering light entering the sheet-shaped glass structure, but specific examples thereof include inorganic substances such as calcium carbonate and silica. One of these compounds may be used alone, or two or more of them may be used in combination. Among these, calcium carbonate is preferable as the light scattering compound. The light scattering compound, particularly, calcium carbonate has a property of anisotropically scattering irradiation light, specifically, anisotropically scatters the light emitted from the back surface side toward the front side easily, as described above. This facilitates enhancing the contrast and the luminance of the images to be displayed on the front surface of the sheet-shaped glass structure.

Further, the light scattering compound is preferably in the form of particles. The average particle size of the light scattering compound in the form of particles is preferably 1 to 50 µm. Adjusting the average particle size to such a range allows the sheet-shaped glass structure to anisotropically scatter the entered light easily, so that the images to be displayed tend to have high contrast and high luminance. From such a viewpoint, the average particle size of the light scattering compound is more preferably 1.2 µm or more, further preferably 1.5 µm or more. Further, the average particle size is more preferably 30 µm or less, further preferably 20 µm or less.

The average particle size means a volume-average particle size. The average particle size can be specifically measured by a dynamic light scattering method using a light scattering measuring device with Ar laser serving as a light source. Examples of the light scattering measuring device include "DLS-6000AL" manufactured by Otsuka Electronics Co., Ltd.

The content of the light scattering compound in the light scattering layer is preferably 0.1 mass% or more, more preferably 0.5 mass% or more, further preferably 1 mass% or more, most preferably 2 mass% or more. Adjusting the content to such a lower limit or more allows the light from the light source to be appropriately scattered in the light scattering layer, thereby allowing the images displayed on the sheet-shaped glass structure to have high contrast and high luminance. Further, the light source, the optical member, and the like disposed on the back surface side of the screen are further less likely to be viewed, and the privacy protection is further easily enhanced.

The content of the light scattering compound in the light scattering layer is preferably 30 mass% or less, more preferably 15 mass% or less, further preferably 10 mass% or less. Adjusting the content to such an upper limit or less prevents unnecessary blocking of the light from the light source in the light scattering layer, thereby facilitating enhancing the luminance of the images to be displayed. Further, the light scattering compound prevents unnecessary blocking of the light, and thus the sheet-shaped glass structure can be suitably used for window glass and the like.

### [Light scattering layer]

As described above, the sheet-shaped glass structure has the light scattering layer containing the light scattering compound. In the light scattering layer, the light scattering compound is dispersed therein. As mentioned above, the glass plate may serve as the light scattering layer in the present invention. When the glass plate contains the light scattering compound and serves as the light scattering layer, the sheet-shaped glass structure can have a single layer structure composed of the glass plate alone. Further, in the case where the glass plate itself serves as the light scattering layer, the light scattering compound is dispersed in an inorganic material composing inorganic glass or an organic material composing organic glass.

Further, in the sheet-shaped glass structure of the present invention, a layer other than the glass plate preferably serves as the light scattering layer. In such a case, the sheet-shaped glass structure has a multilayer structure in which at least the glass plate and the light scattering layer are laminated.

### (Light scattering resin layer)

In the multilayer structure in which at least the glass plate and the light scattering layer are laminated, the light scattering layer preferably contains a resin and the light scattering compound to form a light scattering resin layer with the light scattering compound dispersed in the resin. The resin used in the light scattering resin layer is preferably a thermoplastic resin. Use of the thermoplastic resin allows the light scattering resin layer to easily exert a function as an adhesive layer so as to easily adhere to the glass plate or the like. The content of the light scattering compound in the light scattering resin layer (light scattering layer) is as described above.

The thermoplastic resin to be used in the light scattering resin layer is not specifically limited, but examples thereof include polyvinyl acetal resins, ethylene-vinyl acetate copolymer resins, ionomer resins, polyurethane resins, and thermoplastic elastomers or the like. Use of such a resin facilitates ensuring adhesion of the light scattering resin layer to the glass plate.

In the light scattering resin layer, one of such thermoplastic resins may be used alone, or two or more of them may be used in combination. Among these, polyvinyl acetal resins are particularly suitable. In the case where the light scattering resin layer contains a plasticizer, use of a polyvinyl acetal resin allows excellent adhesion to inorganic glass to be exerted. Further, use of the polyvinyl acetal resin and use of the light scattering resin layer as an interlayer, which will be described below, facilitates obtaining properties that are necessary for laminated glass, such as penetration resistance and sound insulation.

### (Polyvinyl acetal resin)

The polyvinyl acetal resin is not specifically limited as long as the polyvinyl acetal resin is obtained by acetalization of polyvinyl alcohol with aldehyde, but is suitably a polyvinyl butyral resin.

The lower limit of the degree of acetalization of the aforementioned polyvinyl acetal resin is preferably 40 mol%, the upper limit is preferably 85 mol%, the lower limit is more preferably 60 mol%, and the upper limit is more preferably 75 mol%.

The lower limit of the amount of hydroxyl groups in the polyvinyl acetal resin is preferably 15 mol%, and the upper limit is preferably 35 mol%. Adjusting the amount of hydroxyl groups to 15 mol% or more facilitates achieving good adhesion to the glass plate, particularly, to the glass plate that is inorganic glass. Further, in the case of using the light scattering resin layer as an interlayer, which will be described below, good penetration resistance of the sheet-shaped glass structure is also easily achieved. Further, adjusting the amount of hydroxyl groups to 35 mol% or less prevents the sheet-shaped glass structure from becoming excessively hard. The lower limit of the amount of hydroxyl groups is more preferably 25 mol%, and the upper limit is more preferably 33 mol%.

Also in the case of using a polyvinyl butyral resin as the polyvinyl acetal resin, the lower limit of the amount of hydroxyl groups is preferably 15 mol%, the upper limit is preferably 35 mol%, the lower limit is more preferably 25 mol%, and the upper limit is more preferably 33 mol%, from the same point of view.

The degree of acetalization and the amount of hydroxyl groups can be measured, for example, by a method according to JIS K6728 "Testing methods for polyvinyl butyral".

The polyvinyl acetal resin can be prepared by acetalization of polyvinyl alcohol with aldehyde. Polyvinyl alcohol is typically obtained by saponification of polyvinyl acetate, and polyvinyl alcohol with a saponification degree of 80 to 99.8 mol% is generally used therefor.

The lower limit of the polymerization degree of the polyvinyl acetal resin is preferably 500, and the upper limit thereof is preferably 4000. Adjusting the polymerization degree to 500 or more allows good penetration resistance of the sheet-shaped glass structure to be achieved, for example, in the case when the light scattering resin layer is used as an interlayer. Further, adjusting the degree of polymerization to 4000 or less facilitates forming the sheet-shaped glass structure. The lower limit of the degree of polymerization is more preferably 1000, and the upper limit is more preferably 3600.

The aldehyde is not specifically limited, but typically, an aldehyde having 1 to 10 carbon atoms is suitably used therefor. The aldehyde having 1 to 10 carbon atoms is not specifically limited, and examples thereof include n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, and benzaldehyde. Among these, n-butyraldehyde, n-hexylaldehyde, and n-valeraldehyde are preferable, and n-butyraldehyde is more preferable. These aldehydes may be used singly, or in combinations of two or more.

### (Ethylene-vinyl acetate copolymer resin)

The ethylene-vinyl acetate copolymer resin may be a non-crosslinkable ethylene-vinyl acetate copolymer resin or may be a high-temperature crosslinkable ethylene-vinyl acetate copolymer resin. Further, an ethylene-vinyl acetate modified resin such as a saponified product of ethylene-vinyl acetate copolymer and a hydrolysate of ethylene-vinyl acetate can also be used as the ethylene-vinyl acetate copolymer resin.

The ethylene-vinyl acetate copolymer resin has a vinyl acetate content, as measured according to JIS K6730 "Testing methods for ethylene-vinyl acetate resin", of preferably 10 to 50 mass%, more preferably 20 to 40 mass%. Adjusting the vinyl acetate content to such a lower limit or more facilitates achieving good adhesion to the glass plate or the like, and further facilitates achieving good penetration resistance of the sheet-shaped glass structure in the case when the light scattering resin layer is used as an interlayer. Further, adjusting the vinyl acetate content to such an upper limit or less enhances the fracture strength of the light scattering resin layer and allows good impact resistance of the sheet-shaped glass structure.

### (Ionomer resin)

The ionomer resin is not specifically limited, and various ionomer resins can be used therefor. Specifically, examples thereof include ethylene-based ionomers, styrene-based ionomers, perfluorocarbon-based ionomers, telechelic ionomers, and polyurethane ionomers. Among these, ethylene-based ionomers are preferable, for allowing the sheet-shaped glass structure to have good mechanical strength, good durability, good transparency, and the like, and for achieving excellent adhesion to a glass plate in the case when the glass plate is inorganic glass.

As such an ethylene-based ionomer, an ionomer of ethylene-unsaturated carboxylic acid copolymer is suitably used because of its excellent transparency and toughness. The ethylene-unsaturated carboxylic acid copolymer is a copolymer at least having constitutional units derived from ethylene and constitutional units derived from unsaturated carboxylic acid, and optionally having constitutional units derived from other monomers.

Examples of the unsaturated carboxylic acid include acrylic acid, methacrylic acid, and maleic acid. Acrylic acid and methacrylic acid are preferable. Further, examples of the other monomers include acrylic acid ester, methacrylic acid ester, and 1-butene.

As for the ethylene-unsaturated carboxylic acid copolymer, in the case where all constitutional units contained in the copolymer is defined as 100 mol%, the copolymer preferably has 75 to 99 mol% of constitutional units derived from ethylene and preferably has 1 to 25 mol% of constitutional units derived from unsaturated carboxylic acid.

The ionomer of ethylene-unsaturated carboxylic acid copolymer is an ionomer resin obtained by neutralization or crosslinking of at least part of carboxyl groups contained in the ethylene-unsaturated carboxylic acid copolymer with metal ions, and the degree of neutralization of the carboxyl groups is typically 1 to 90%, preferably 5 to 85%.

Examples of ion sources in the ionomer resin include alkali metals such as lithium, sodium, potassium, rubidium, and cesium, and polyvalent metals such as magnesium, calcium, and zinc. Sodium and zinc are preferable.

The method for producing such an ionomer resin is not specifically limited, and a conventionally known production method can be used for the production. For example, in the case where an ionomer of ethylene-unsaturated carboxylic acid copolymer is used as the ionomer resin, ethylene and unsaturated carboxylic acid are radically copolymerized under a high temperature and high pressure, to produce an ethylene-unsaturated carboxylic acid copolymer. Then, the ethylene-unsaturated carboxylic acid copolymer is reacted with a metal compound containing the aforementioned ion source, so that the ionomer of ethylene-unsaturated carboxylic acid copolymer can be produced.

### (Polyurethane resin)

Examples of the polyurethane resin include polyurethane obtained by reacting an isocyanate compound with a diol compound, and polyurethane obtained by reacting an isocyanate compound with a diol compound and further a chain extender such as polyamine. Further, the polyurethane resin may contain sulfur atoms. In such a case, it is preferable that part or whole of the aforementioned diol be selected from the group consisting of polythiols and sulfur-containing polyols. The polyurethane resin can allow good adhesion to an organic glass. Therefore, the polyurethane resin is suitably used in the case where the glass plate is organic glass.

### (Thermoplastic elastomer)

Examples of the thermoplastic elastomer include styrene-based thermoplastic elastomers and aliphatic polyolefins. The styrene-based thermoplastic elastomers are not specifically limited, and known elastomers can be used. Styrene-based thermoplastic elastomers generally have a styrene monomer-polymer block serving as the hard segment and a conjugated diene compound-polymer block or a hydrogenated block thereof serving as the soft segment. Specific examples of the styrene-based thermoplastic elastomers include a styrene-isoprene diblock copolymer, a styrene-butadiene diblock copolymer, a styrene-isoprene-styrene triblock copolymer, a styrene-butadiene/isoprene-styrene triblock copolymer, a styrene-butadiene-styrene triblock copolymer, and hydrogenated products thereof.

The aliphatic polyolefins may be saturated aliphatic polyolefins or may be unsaturated aliphatic polyolefins. The aliphatic polyolefins may be polyolefins containing chain olefins as monomers or may be polyolefins containing cyclic olefins as monomers. For effectively enhancing the storage stability and the sound insulating properties of the interlayer, the aliphatic polyolefins are preferably saturated aliphatic polyolefins.

Examples of materials for the aliphatic polyolefins include ethylene, propylene, 1-butene, trans-2-butene, cis-2-butene, 1-pentene, trans-2-pentene, cis-2-pentene, 1-hexene, trans-2-hexene, cis-2-hexene, trans-3-hexene, cis-3-hexene, 1-heptene, trans-2-heptene, cis-2-heptene, trans-3-heptene, cis-3-heptene, 1-octene, trans-2-octene, cis-2-octene, trans-3-octene, cis-3-octene, trans-4-octene, cis-4-octene, 1-nonene, trans-2-nonene, cis-2-nonene, trans-3-nonene, cis-3-nonene, trans-4-nonene, cis-4-nonene, 1-decene, trans-2-decene, cis-2-decene, trans-3-decene, cis-3-decene, trans-4-decene, cis-4-decene, trans-5-decene, cis-5-decene, 4-methyl-1-pentene, and vinyl cyclohexane.

### (Plasticizer)

In the case where the light scattering resin layer contains a thermoplastic resin, the light scattering resin layer may further contain a plasticizer. When the light scattering resin layer contains a plasticizer, the light scattering resin layer is flexible, as a result of which the sheet-shaped glass structure is flexible. Further, in the case of the glass plate, particularly, in the case where the glass plate is inorganic glass, the adhesion to the glass plate can also be enhanced. Further, in the case where the polyvinyl acetal resin is used as a thermoplastic resin, it is particularly effective that the light scattering resin layer contains a plasticizer.

Examples of the plasticizer include organic ester plasticizers such as monobasic organic acid esters and polybasic organic acid esters, and phosphate plasticizers such as organic phosphate plasticizers and organic phosphite plasticizers. Among these, organic ester plasticizers are preferable.

Examples of the organic ester plasticizer include triethylene glycol di-2-ethylbutyrate, triethylene glycol di-2-ethyl hexanoate, triethylene glycol dicaprylate, triethylene glycol di-n-octanoate, triethylene glycol di-n-heptanoate, tetraethylene glycol di-n-heptanoate, tetraethylene glycol di-2-ethyl hexanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, 1,2-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, triethylene glycol di-n-heptanoate, tetraethylene glycol di-n-heptanoate, triethylene glycol di-2-ethylbutyrate, dihexyl adipate, dioctyl adipate, hexylcyclohexyl adipate, diisononyl adipate, heptylnonyl adipate, dibutyl sebacate, oil-modified sebacic alkyds, a mixture of a phosphate ester and an adipate ester, mixed adipate esters. Examples of the mixed adipate esters include adipate esters prepared from two or more alcohols selected from alkyl alcohols having 4 to 9 carbon atoms and cyclic alcohols having 4 to 9 carbon atoms.

Among these plasticizers, triethylene glycol-di-2-ethyl hexanoate (3GO) is particularly suitably used.

The content of plasticizer is not specifically limited, but the lower limit is preferably 30 parts by mass, and the upper limit is preferably 70 parts by mass, relative to 100 parts by mass of the thermoplastic resin. When the content of plasticizer is 30 parts by mass or more, the sheet-shaped glass structure becomes appropriate flexible, and its handleability and the like is improved. Further, when the content of plasticizer is 70 parts by mass or less, separation of the plasticizer from the light scattering resin layer is prevented. The lower limit of the content of plasticizer is more preferably 35 parts by mass, and the upper limit is more preferably 63 parts by mass.

Further, in the case of containing a thermoplastic resin, the light scattering resin layer of the present invention mainly contains the thermoplastic resin, or the thermoplastic resin and the plasticizer. The total amount of the thermoplastic resin and the plasticizer is typically 70 mass% or more, preferably 80 mass% or more, further preferably 90 mass% or more, based on the total amount of the light scattering resin layer.

The light scattering resin layer may contain other additives other than above, such as dispersants, heat shielding particles, light shielding agents, antioxidants, adhesion modifiers, ultraviolet absorbers, infrared absorbers, antistatic agents, flame retardants, and moisturizers and the like, as required.

The thickness of the light scattering resin layer in the sheet-shaped glass structure is preferably 0.1 mm or more, more preferably 0.2 mm or more, further preferably 0.3 mm or more. When the thickness of the light scattering resin layer is adjusted to such a lower limit or more, the light from the light source can be appropriately scattered in the light scattering resin layer, so that the images to be displayed on the sheet-shaped glass structure can have high contrast and high luminance. Further, the light source, the optical member, and the like disposed on the back surface side of the sheet-shaped glass structure can be less likely to be viewed, and further the privacy protection is easily enhanced.

Further, the thickness of the light scattering resin layer in the sheet-shaped glass structure is preferably 2 mm or less, more preferably 1.5 mm or less, further preferably 1 mm or less. When the light scattering resin layer is adjusted to such an upper limit or less, unnecessary blocking of the light from the light source in the light scattering resin layer can be prevented, so that high luminance of the images to be displayed can be achieved, further enabling suitable use as window glass.

In the case when two or more light scattering resin layers are provided in the sheet-shaped glass structure, the thickness of the light scattering resin layer in the sheet-shaped glass structure means the total thickness of the light scattering resin layers.

Further, the sheet-shaped glass structure may have a resin layer other than the light scattering resin layer. Such a resin layer preferably uses a thermoplastic resin as the resin. Specific examples of the thermoplastic resin that can be used include various thermoplastic resins described above, and the details are as described above.

Further, the resin layer other than the light scattering resin layer may contain a plasticizer other than the thermoplastic resin, and may further contain other additives. The details of such a resin layer are the same as those of the light scattering resin layer described above, except that the resin layer does not contain the light scattering compound, and thus the descriptions thereof are omitted. In the following description, the resin layer other than the light scattering resin layer may be simply abbreviated as "resin layer".

### (Glass plate)

As the glass plate used in the present invention, either inorganic glass or organic glass can be used. The inorganic glass plates are not specifically limited, but examples thereof include clear glass, float plate glass, polished plate glass, figured glass, net-wired plate glass, line-wired plate glass, and green glass.

Further, organic glasses generally called resin glass are used therefor and are not specifically limited, but examples thereof include organic glasses composed of resins such as polycarbonates, acrylic resins, acrylic copolymer resins, and polyesters.

In the case where the sheet-shaped glass structure has two or more glass plates, the plurality of glass plates may be composed of the same material as each other or may be composed of different materials. For example, in the case where two glass plates are provided, one may be an inorganic glass, and the other may be an organic glass. However, in the case where a plurality of glass plates are provided, it is preferable that the plurality of glass plates are all inorganic glasses or all organic glasses.

Further, the thickness of each glass plate is not specifically limited but is, for example, about 0.1 to 15 mm, preferably 0.5 to 5 mm. In the case where the sheet-shaped glass structure has a plurality of glass plates, the thickness of each glass plate may be the same as or different from each other.

### [Layer configuration of sheet-shaped glass structure]

The sheet-shaped glass structure may be composed of a single layer, but preferably has a multilayer structure in which at least the glass plate and the light scattering resin layer are laminated, as described above. Further, the sheet-shaped glass structure preferably has a laminated glass structure including two glass plates and an interlayer disposed between the glass plates. In the laminated glass structure, the two glass plates are bonded via the interlayer. When the sheet-shaped glass structure has such a laminated glass structure, the penetration resistance, the sound insulating properties, the impact resistance, and the like are good. More preferably, the interlayer contains the light scattering resin layer in the laminated glass structure.

The interlayer in the laminated glass structure may be composed of a single layer or a plurality of layers. In the case of a single layer, the single layer is preferably the light scattering resin layer. In the case of a plurality of layers, each layer is any one of the light scattering resin layer and the resin layer described above, and at least one layer is preferably the light scattering resin layer. Figs. 2 to 4 show preferable embodiments in the case where the sheet-shaped glass structure has an interlayer and thus has a laminated glass structure.

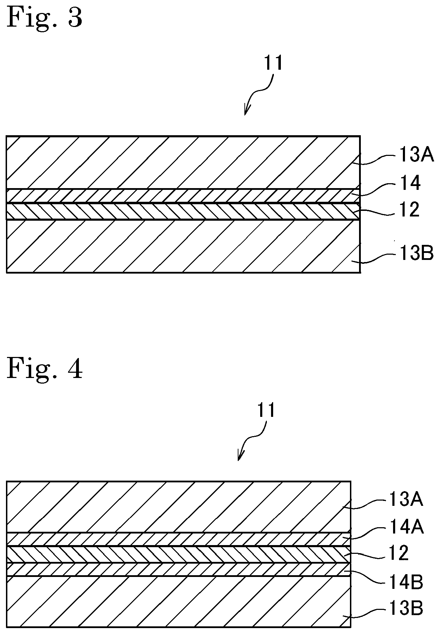

In one preferable embodiment, the interlayer is composed of the light scattering resin layer that is a single layer, and the sheet-shaped glass structure 11 has a structure in which two glass plates 13A and 13B are bonded by a light scattering resin layer 12 that is a single layer, as shown in Fig. 2. In another preferable embodiment, the sheet-shaped glass structure 11 has a structure in which the interlayer is composed of a laminated structure of the light scattering resin layer 12 and a resin layer 14 with the light scattering resin layer 12 bonded to one glass plate 13A and the resin layer 14 bonded to the other glass plate 13B, as shown in Fig. 3.

In still another preferable embodiment, the sheet-shaped glass structure 11 has a laminated structure in which the light scattering resin layer 12 is disposed between two layers of resin layers 14A and 14B to serve as the interlayer, and the resin layers 14A and 14B are respectively bonded to the glass plates 13A and 13B, as shown in Fig. 4. As in the embodiments shown in Figs. 3 and 4, in the laminated glass structure, when the interlayer is bonded to the glass plates by resin layers other than the light scattering resin layer, the adhesion of the interlayer to the glass plates is easily enhanced.

As shown in Fig. 2, the thickness of the interlayer in the case where the interlayer is composed of the light scattering resin layer 12 that is a single layer is as described above. Further, in the case when the interlayer is composed of two or more layers, the total thickness of the interlayer is, for example, 0.2 to 3 mm, preferably 0.3 to 2 mm.

The light scattering layer (or the light scattering resin layer) may be formed on the entire surface of the sheet-shaped glass structure, but may be formed in a partial region. For example, as in Fig. 4, in the case where the interlayer has two resin layers 14A and 14B and the light scattering resin layer 12, the light scattering resin layer 12 may be provided in a partial region of the sheet-shaped glass structure, and the light scattering resin layer 12 may not be provided in the other region. That is, the interlayer is provided with a part composed of two layers of the resin layers 14A and 14B and a part composed of three layers of the resin layers 14A and 14B and the light scattering resin layer 12. In this way, in the case where the light scattering layer is provided in a partial region of the sheet-shaped glass structure, the light from the light source may irradiate the region provided with the light scattering layer.

Further, the sheet-shaped glass structure may be provided with a region in which the thickness of the light scattering layer is gradually decreased and a region in which the thickness of the light scattering layer is kept constant. In such a case, the light from the light source may irradiate the region in which the thickness of the light scattering layer is kept constant.

Further, the light scattering resin layer is not necessarily contained in the interlayer, and may be, for example, provided on a surface on the opposite side of the surface on the interlayer side of any one of the glass plates in the laminated glass structure. Further, for example, in the case where the sheet-shaped glass structure does not have such a laminated glass structure, and thus have one glass plate, the light scattering resin layer may be provided on any one of the surfaces of the glass plate that is a single layer.

In this way, in the case where the light scattering resin layer is provided on the surface on the opposite side in the laminated glass structure or on any one of the surfaces of the glass plate that is a single layer, the sheet-shaped member having the light scattering resin layer may be bonded to the surface of the single layer glass or the laminated glass structure via an adhesive, a pressure-sensitive adhesive, or the like. Thereby, the light scattering layer can be provided on existing window glass or the like by laminating the sheet-shaped member by so-called post bonding onto the window glass or the like.

Examples of the sheet-shaped member having the light scattering resin layer include a resin sheet composed of the light scattering resin layer that is a single layer, and an adhesive layer, a pressure-sensitive adhesive layer may be provided on one surface of the sheet-shaped member.

Further, the total light transmittance (TvD) of the sheet-shaped glass structure is preferably 40% or more, more preferably 45% or more, further preferably 50% or more. By adjusting the total light transmittance to such a lower limit or more, high luminance of the image to be displayed can be easily achieved. Further, the sheet-shaped glass structure can be suitably used as window glass since it transmits a certain amount of light.

The total light transmittance (TvD) of the sheet-shaped glass structure is preferably 95% or less, more preferably 80% or less, further preferably 70% or less, for enhancing the privacy protection.

The sheet-shaped glass structure of the present invention can be produced by a known method, and may be produced, for example, by appropriately stacking a glass plate, a light scattering resin layer, a resin layer, and the like together and integrating them by pressure bonding or the like. Further, in the case when the sheet-shaped glass structure has a laminated glass structure, the sheet-shaped glass structure may be produced by disposing an interlayer between two glass plates and integrating them by pressure bonding or the like.

Further, the light scattering resin layer and the resin layer may be formed by kneading materials constituting each layer such as a thermoplastic resin and a light scattering compound and forming the obtained resin composition by extrusion molding, press molding, or the like. Further, in the case where the sheet-shaped glass structure has a multilayer structure in which two or more layers selected from resin layers and light scattering resin layers are laminated in the interlayer or the like, the multilayer structure may be formed by coextrusion using a multilayer feed block or the like.

The sheet-shaped glass structure can be used for various applications and is preferably used for various window glass. More specifically, it can be used as window glass for vehicles such as automobiles, railway vehicles, aircrafts, and ships, or window glass for constructions. The image display system of the present invention enables various images such as projected images, messages, and logos to be displayed on various window glass by using the sheet-shaped glass structure as the window glass.

For example, in the case of use as window glass for constructions, various images may be displayed on the outer surface of the window glass by installing a light source inside a construction and irradiating the inner surface of the window glass with the light from the light source. Likewise, in the case of use as window glass for vehicles, various images may be displayed on the outer surface of the window glass by installing a light source inside a vehicle.

Further, images may be displayed on the inner surface of the window glass by irradiating the outer surface of the window glass for constrictions or vehicles with the light from the light source. Specifically, images may be displayed on the inner surface of a windshield, a rear glass, or the like by installing a light source in a bonnet, a trunk, or the like of an automobile and irradiating such glass with light from outside.

Further, since the window glass transmits light but makes humans or materials less likely to be viewed through the window glass, high privacy protection of the window glass can be achieved.

### Examples

The present invention will be described further in detail by referring to examples, but the present invention is by no means limited by these examples at all.

Measurement for various physical properties and evaluation thereof were carried out, as follows.

### [Total light transmittance]

The total light transmittance (TvD) was measured according to JIS R3106 (1998). Specifically, the spectral transmittance was measured, using a spectrophotometer ("U-4100" manufactured by Hitachi High-Technologies Corporation), by bringing the sheet-shaped glass structure into parallel and close contact with the opening of the integrating sphere so that the transmitted light was totally received by the integrating sphere. The visible light transmittance calculated from the spectral transmittance obtained was defined as a total light transmittance.

### [Image evaluation]

One surface of the sheet-shaped glass structure obtained in each of Examples and Comparative Examples was irradiated with light by using a projector (product name "Ultra-short-focus projector PJ WX4152NI" manufactured by Ricoh Company Ltd.) so as to project an image on the other surface of the sheet-shaped glass structure. The image projected was observed from the other surface side of the sheet-shaped glass structure, to evaluate the contrast and the luminance based on the following evaluation criteria. Further, the extent to which the projector was viewed via the sheet-shaped glass structure was also evaluated.

### (Contrast)

A: The image projected from the projector was clearly discerned, and the contrast was good.
B: The image projected from the projector was blurred, and the contrast was insufficient.

### (Luminance)

A: When the image projected was observed at a distance of 3 m from the sheet-shaped glass structure, the image could be sufficiently discerned, and the luminance was good.
B: When the image projected was observed at a distance of 3 m from the sheet-shaped glass structure, the image could not be discerned, and the luminance was insufficient.

### (Visibility level of projector)

A: The projector could not be viewed through the sheet-shaped glass structure at all or almost at all.
B: The projector could be viewed through the sheet-shaped glass structure.

The components used in each of Examples and Comparative Examples were as follows.
Polyvinyl acetal resin: Polyvinyl butyral (with an acetylation degree of 1 mol%, a butyralization degree of 69 mol%, and a hydroxyl content of 30 mol%) obtained by acetalization of polyvinyl alcohol (having an average polymerization degree of 1700) with n-butyl aldehyde
Plasticizer: Triethylene glycol di-2-ethylhexanoate (3GO)
Light scattering compound: Calcium carbonate particles ("Super 1500" available from MARUO CALCIUM CO., LTD. with a volume-average particle size of 10.1 µm)

### [Example 1]

### (Fabrication of light scattering resin layer)

3 parts by mass of the light scattering compound and 40 parts by mass of the plasticizer were mixed with 100 parts by mass of the polyvinyl acetal resin, followed by sufficient kneading using a mixing roll, to obtain a resin composition. The resin composition was molded using a hot press, to fabricate a light scattering resin layer (interlayer) with a thickness of 0.8 mm.

### (Fabrication of sheet-shaped glass structure)

Two sheets of clear glass (length 100 cm × width 30 cm × thickness 2.5 mm) according to JIS R3202 (1996) were prepared. The light scattering resin layer was interposed between the two sheets of clear glass, to obtain a laminate. The laminate was put into a rubber bag, followed by degassing at a degree of vacuum of 2.6 kPa for 20 minutes, then transferred into an oven while maintaining the degassed state, and further maintained at 90°C for 30 minutes for vacuum pressing, thereby preliminarily pressure-bonding the laminate. The laminate temporarily pressure-bonded was pressure-bonded for 20 minutes under conditions of 135°C and a pressure of 1.2 MPa in an autoclave, to obtain a sheet-shaped glass structure composed of glass plate/light scattering resin layer (interlayer)/glass plate.

As a result of evaluation of the sheet-shaped glass structure obtained, both the contrast and the luminance were A, and images could be displayed on the surface of the sheet-shaped glass structure with high contrast and high luminance. Further, the visibility level of the projector was A, and the projector disposed on the back surface side could not be substantially viewed. Further, the sheet-shaped glass structure had a total light transmittance of 50%, thus transmitting light to an extent that sufficiently allowed use as window glass and having excellent privacy protection.

### [Comparative Example 1]

A sheet-shaped glass structure was fabricated in the same manner as in Example 1, except that the light scattering compound was not added.

As a result of evaluation of the sheet-shaped glass structure obtained, both the contrast and the luminance were B, and images could not be displayed on the surface of the sheet-shaped glass structure with high contrast and high luminance. Further, the visibility level of the projector was B, and the projector disposed on the back surface side was viewed to an extent that affects the view of the projected image. Further, the sheet-shaped glass structure had a total light transmittance of 85%, and the privacy protection was insufficient.

### Reference Signs List

- 10:: Image display system
- 11:: Sheet-shaped glass structure
- 11B:: Back surface (one surface)
- 11F:: Front surface (the other surface)
- 12:: Light scattering resin layer
- 13A and 13B:: Glass plate
- 14, 14A, and 14B:: Resin layer
- 20:: Light source
- OB:: Observer

## Claims

1. An image display system comprising:
a sheet-shaped glass structure comprising a light scattering compound; and
a light source that irradiates one surface of the sheet-shaped glass structure with light,
an image being displayed on the other surface of the sheet-shaped glass structure by the light scattered by the light scattering compound.

2. The image display system according to claim 1, wherein
the sheet-shaped glass structure comprises a light scattering layer comprising a light scattering compound, and
the content of the light scattering compound in the light scattering layer is 0.1 to 30 mass%.

3. The image display system according to claim 2, wherein
the sheet-shaped glass structure has a multilayer structure in which at least a glass plate and the light scattering layer are laminated.

4. The image display system according to claim 2 or 3, wherein
the light scattering layer is a light scattering resin layer comprising a resin and the light scattering compound dispersed in the resin.

5. The image display system according to claim 4, wherein
the sheet-shaped glass structure has a laminated glass structure comprising two glass plates and an interlayer disposed between the glass plates, and
the interlayer comprises the light scattering resin layer.

6. The image display system according to claim 4 or 5, wherein
the resin is a thermoplastic resin.

7. The image display system according to claim 6, wherein
the thermoplastic resin is a polyvinyl acetal resin.

8. The image display system according to any one of claims 1 to 7, wherein
the light scattering compound is calcium carbonate.

9. The image display system according to any one of claims 1 to 8, wherein
the light scattering compound is in the form of particles having an average particle size of 1 to 50 µm.

10. An image display method comprising:
irradiating one surface of a sheet-shaped glass structure comprising a light scattering compound with light from a light source; and
displaying an image on the other surface of the sheet-shaped glass structure by the light scattered by the light scattering compound.
